# EUROPÄISCHE PATENTSCHRIFT

(11) **EP 1 274 500 B1**
(45) Veröffentlichungstag und Bekanntmachung des Hinweises auf die Patenterteilung: **25.02.2004**
(21) Anmeldenummer: 01929552.6
(22) Anmeldetag: 12.04.2001
(51) Int. Cl.: B01D 63/02, B01D 63/08, B01D 69/12

(54) **VORRICHTUNG BESTEHEND AUS EINER VERBUNDMEMBRANE UND AUS EINER VORRICHTUNG FÜR EINE ENERGIEZUFUHR ODER ENERGIEABLEITUNG**
APPARATUS CONSISTING OF A COMPOSITE MEMBRANE AND A DEVICE FOR THE SUPPLY OR THE ELIMINATION OF ENERGY
APPAREIL CONSISTANT EN UNE MEMBRANE COMPOSITE ET EN UN DISPOSITIF POUR LA FOURNITURE OU LA DEPERDITION D'ENERGIE

(30) Priorität: 19.04.2000 DE 10019287
(43) Veröffentlichungstag der Anmeldung: 15.01.2003
(73) Patentinhaber: Neubert, Susanne, 71134 Aidlingen (DE)
(72) Erfinder: NEUBERT, Joachim, 71088 Holzgerlingen (DE); STAAB, Karl-Ferdinand, 71263 Weil der Stadt (DE)
(74) Vertreter: Neubauer, Hans-Jürgen, Dipl.-Phys.
(86) Internationale Anmeldenummer: PCT/EP2001/004218
(87) Internationale Veröffentlichungsnummer: WO 2001/083090

(56) Entgegenhaltungen:
- WO-A-00/54866
- DE-A- 4 210 413
- DE-A- 19 853 286
- PATENT ABSTRACTS OF JAPAN vol. 015, no. 163 (C-0826), 24. April 1991 (1991-04-24) & JP 03 032729 A (BIOMATERIAL UNIVERSE KK), 13. Februar 1991 (1991-02-13)

## Beschreibung

Die Erfindung betrifft eine Vorrichtung bestehend aus einer Verbundmembrane und aus einer Vorrichtung für eine Energiezufuhr oder Energieableitung.

Allgemein sind Membranen zur Trennung von Lösungen und Suspensionen aus vielfältigen Membranmaterialien bekannt, die in der Regel eine gute Trennwirkung, jedoch einen geringen Flux auch bei erhöhtem Transmembrandruck aufweisen. Unter Flux bzw. Flux-Leistung wird hier die durch die Membran durchgehende Trägerflüssigkeit in l/(m² x h) oder m³/(m² x h) verstanden. Die Flux-Minderung wird bei diesen allgemein bekannten Membranen dadurch hervorgerufen, dass bei höheren Überströmgeschwindigkeiten verbunden mit hohem Reibungsverlaust der Energieverbrauch stark ansteigt und daher nur niedrige Strömgeschwindigkeiten wirtschaftlich sind. Als Überströmgeschwindigkeit in m/s wird die Geschwindigkeit verstanden, mit der die suspendierte Stoffe enthaltende Flüssigkeit über die Membranfläche strömt. Bei niedrigen Überströmgeschwindigkeiten neigen solche allgemein bekannten Membranen zu einem Fouling, d. h. zu einem Absetzen der abgetrennten Substanzen auf der Membranfläche, wodurch eine weitere ungünstige Minderung des Flux wegen des gesteigerten Widerstandes erfolgt.

Eine vorbekannte Membrane als Verbundmembrane (DE 42 10 413 A1) besteht aus einem flächigen Trägerkörper mit relativ großen Durchströmöffnungen auf dem schichtweise eine Trennfunktionsschicht als Membranschicht aufgebracht ist, die aus einem Verbund aus einem körnigen Füllstoff und einem Bindemittel besteht. Dabei stellt der Trägerkörper ein Stützgerüst dar für eine Membranschicht aus gebundenem, pulverförmigen Füllstoff, wobei die Pulverkörper und das Bindemittel so beschaffen sind, dass die Trennfunktionsschicht Poren aufweist, durch die die Trägerflüssigkeit kontinuierlich passieren kann, wogegen die abzutrennenden Stoffe im wesentlichen zurückgehalten werden.

Bei einer konkreten Ausführungsform einer solchen Membrane wird die Funktionsschicht bei der Herstellung in mehreren Schichten aufgetragen, wobei nach jedem Auftragen ein Trocknen und Ausheizen sowie Sintern der Schicht erfolgt. Diese aufgebrachten Schichten sind hinsichtlich ihrer Struktur und Zusammensetzung jeweils gleich, so das hier der schichtweise Aufbau nur zur Herstellung einer insgesamt größeren Schichtdicke mit einer insgesamt hinsichtlich ihrer Struktur und Zusammensetzung gleichen Trennfunktionsschicht verwendet wird. Bei einer Mischung von Bindemittel und Füllstoff, insbesondere im konkret angegebenen Verhältnis von 30% zu 70% ergeben sich grundsätzlich günstigere Bedingungen gegenüber den eingangs erwähnten, allgemein bekannten Membranen hinsichtlich des inneren Fließwiderstands der Membran, weiche jedoch mit steigender Anzahl der gleichstnrkturierten Aufbauschichten und damit der Schichtdicke der Trennfunktionsschicht nachteilig wieder vermindert werden. Bei dem konkret angegebenen Bindemittel Polyethersulfon ergibt sich zudem noch ein Nachteil im Hinblick auf die Hydrophilie der Membrane.

Aufgabe der Erfindung ist es, eine Vorrichtung mit einer Membran so weiterzubilden, dass der innere Fließwiderstand der Membrane ohne Verminderung der Rückhaltewirkung auf die abzuscheidenden Substanzen bei zugleich geringerer erforderlicher Überstrümgeschwindigkeit durch eine gezielte Beeinflussung reduzierbar und damit der Flux entsprechend vergrößerbar ist.

Diese Aufgabe wird mit den Merkmalen des Anspruchs 1 gelöst.

Gemäß Anspruch 1 besteht die Vorrichtung aus einer Verbundmembrane und aus einer Vorrichtung für eine Energiezufuhr oder Energieableitung und aus einer Stelleinrichtung. Die Verbundmembrane besteht aus einem flächigen Trägerkörper mit relativ großen Durchströmöffnungen, auf dem wenigstens eine Trennfunktionsschicht als Membranschicht mit bestimmter Porenanzahl und Porengröße aufgebracht ist. Die Membranschicht besteht wenigstens aus einem Anteil eines sich temperaturabhängig ausdehnenden Membranmaterials, weiches Poren enthält und/oder Poren begrenzt. Die Membranschicht ist wärmeleitend auf dem Trägerkörper aufgebracht, so dass eine Änderung der Trägerkörpertemperatur auch eine Änderung der Membransichttemperatur bewirkt. Der Trägerkörper ist mit der Vorrichtung für eine Energiezufuhr oder Energieableitung verbunden und mit der Stelleinrichtung ist die Energiezufuhr oder Energieableitung der Vorrichtung vorgebbar.

Damit ist es möglich, durch eine gezielte Beeinflussung der einstellbaren Trägerkörpertemperatur und damit über die dadurch indirekt einstellbare Membranschichttemperatur die wirksame Porengröße mittels des Ausdehnungs-Temperaturgangs des Membranmaterials zu variieren und einzustellen. Die Väriationsgröße für die Porenweiten ist dabei im Wesentlichen durch den Ausdehnungs-Temperaturgang des Membranmaterials und die mögliche Temperaturvariation der Membranschichttemperatur vorgegeben. Beispielsweise wird bei Verwendung eines Membranmaterials, das sich bei einer Temperaturerhöhung ausdehnt, bei steigender Temperatur die Porenweite der eingeschlossenen Poren kleiner. Ähnlich wie mit einem Steuerventil kann somit der Flux über die steuerbare Porenweite gesteuert werden.

Vorteilhaft kann damit die Porengröße einer solchen Verbundmembrane auf den jeweiligen Einsatzfall abgestimmt werden, wobei die Flux-Leistung gesteigert werden kann, ohne dass es einer Steigerung des erforderlichen Transmembrandrucks im Vergleich zu bekannten Membranen bedarf. Gleichzeitig kann die notwendige Überströmgeschwindigkeit der die abzutrennenden Stoffe enthaltenden Flüssigkeit merklich ohne Verminderung des Flux vermindert werden.

Damit wird eine hervorragende Maßnahme zur Verfügung gestellt, eine Verbundmembran ausgehend von einer hergestellten Standardmembran mit einer Grundporengröße an unterschiedliche Gegebenheiten und aktuelle Betriebsbedingungen durch eine einfache und unmittelbare Veränderung der Porengröße anzupassen und zu optimieren. Insbesondere kann damit zur Steigerung der Permeatleistung der innere Fließwiderstand der Membrane entsprechend den vorherrschenden laminaren Fließbedingungen deutlich vermindert werden, ohne eine Verminderung der Rückhaltewirkung auf die abzuscheidenden Substanzen zu bewirken.

Gemäß Anspruch 2 weist der Trägerkörper zumindest einen Anteil eines elektrisch leitenden Materials auf und ist mit einer steuerbaren elektrischen Energiequelle verbunden. Damit wird in einem besonders einfachen Aufbau der Trägerkörper für eine Temperaturvariation unmittelbar als ohmsche Heizung verwendet. Bei einem nichtleitendem Trägergrundmaterial kann zur Realisierung einer ohmschen Heizung gemäß Anspruch 3 auch ein Verbund aus elektrisch leitenden und nichtleitenden Materialien zum Aufbau des Trägerkörpers verwendet werden.

Dazu wird nach Anspruch 4 ein Gewebeaufbau in der Art eines Mikrosiebs vorgeschlagen, wobei auch Kombinationen mehrerer Gewebelagen insbesondere aus elektrisch leitendem und nichtleitendem Material verwendet werden können. Gegebenenfalls können auch Verbindungen/Verknüpfungen an den Kreuzungspunkten zur Steigerung der Stabilität vorgenommen werden.

In einer speziellen Ausführungsform nach Anspruch 5 ist der Trägerkörper aus einem Hohlfasermaterial aufgebaut, das flexibel mit Hohlraumveränderungen auf Druckunterschiede in einer umgebenden Flüssigkeit reagiert. Damit kann die Konsistenz und die Volumenausdehnung des Trägerkörpers zusammen mit der wenigstens einen darauf aufgebrachten Membranschicht gegebenenfalls zusätzlich zu der vorstehenden Temperaturbeeinflussung auch durch Variation des Flüssigkeitsdrucks beeinflusst werden. Damit wird eine weitere und gegebenenfalls zusätzliche Maßnahme zur Beeinflussung der Funktion und Optimierung der Membran zur Verfügung gestellt.

Die verwendeten Membranaufbauten und Membranmaterialien dürfen in den verwendeten Temperaturbereichen keine bleibenden Veränderungen zeigen und müssen zudem gegenüber Chemikalien in der Trägerflüssigkeit beständig sein. Mit den Merkmalen des Anspruchs 6 werden Aufbauten und Materialien für den Trägerkörper vorgeschlagen, die je nach den Gegebenheiten und Einsatzfällen in einer oder mehreren Lagen materiateinheitlich oder in Kombination verwendbar sind.

Für eine geeignete Einstellung und Optimierung der Porengröße in der wenigstens einen Membranschicht ist es vorteilhaft den Permeatstrom zu messen. Dazu wird eine Permeatmengen-Messvorrichtung in einer Permeatleitung angebracht. Abhängig vom Messwert dieser Messvorrichtung können dann Einstellungen für die Membrantemperatur zur Steuerung des Permeatstroms beispielsweise von Hand vorgenommen werden.

In einer besonders bevorzugten, weiterführenden Ausführungsform nach Anspruch 7 ist die Anordnung als geschlossener Regelkreis für eine Temperaturregelung und/oder Permeatmengenregelung aufgebaut. Dazu wird der Messwert aus einer Permeatmengen-Messvorrichtung und/oder einer Temperatur-Messvorrichtung an der Membran als Ist-Wert einem Regler, vorzugsweise einem kontinuierlich arbeitendem Regler zugeführt, der mit einem vorgebbaren Soll-Wert beaufschlagt ist. Zweckmäßig wird die Permeatmenge geregelt. Zur Verbesserung des Regelverhaltens kann zudem die Membrantemperatur als Störgröße aufgeschaltet und berücksichtigt werden. Zudem können weitere physikalische Einflussgrößen beispielsweise die Flüssigkeitstemperatur und/oder die Überströmgeschwindigkeit und/oder den Transmembrandruck messtechnisch erfasst und in der Regelung berücksichtigt werden. Damit ist vorteilhaft eine Anordnung geschaffen, die sich selbsttätig an unterschiedliche Gegebenheiten und sich verändernde Betriebsbedingungen optimal anpasst. Zudem können die Messergebnisse auch zur Variation der Einflussgrößen auf die Permeatmenge, beispielsweise zur Variation der Überströmgeschwindigkeit genutzt werden. Auch hierzu ist bei entsprechenden Regelalgorithmen und Programmen eine selbsttätige Anpassung und Optimierung möglich.

Mit den Merkmalen des Anspruchs 8 wird ein für eine gute Membranfunktion geeigneter Aufbau der Membranschicht angegeben. Dazu besteht die wenigstens eine auf den Trägerkörper aufgebrachte Membranschicht aus einem Verbund aus einem kömigen Füllstoff und einem Bindemittel. Bei mehreren Membranschichten als miteinander verbundene übereinanderliegende Aufbauschichten sollen diese unterschiedliche Strukturen aufweisen dergestalt, dass die Aufbauschichten jeweils aufeinanderfolgend und abgestuft einen geringeren Füllstandanteil und entsprechend höheren Bindemittelanteil im Vergleich mit einer davor in Richtung auf den Trägerkörper liegenden Aufbauschicht aufweisen. Mit den Merkmalen der Ansprüche 9 und 10 sind näher konkretisierte, vorteilhafte Aufbauten angegeben.

In der Praxis getestete und bewährte Verhältnisse zwischen Bindemittelanteilen und Füllstoffanteilen sowie für Püiistoffkomgrößen zum Aufbau einer Mikrofiltrationsmembrane, einer Ultrafiltrationsmembrane und einer Nanofiltrationsmembrane sind mit den Ansprüchen 11 bis 14 beansprucht. Gemäß Anspruch 15 kann z. B. für ein Umkehrosmose eine letzte Aufbauschicht aus Bindemittel ohne Füllstoff vorteilhaft sein.

Geeignete Materialien für Füllstoffe und Bindemittel sind mit den Merkmalen 16 und 17 beansprucht, wobei die dort angegebenen Materialien je nach Einsatzfall, materialeinheitlich oder gegebenenfalls in Kombination einsetzbar sind. Vorteilhaft werden elektrisch leitende und/oder gut wärmeleitende Füllstoffe verwendet mit einer Verbindung zu entsprechenden Materialien des Trägerkörpers, so dass dadurch eine Beeinflussung vom Trägerkörper unmittelbar in die wenigstens eine Membranschicht hinein erfolgt und eine schnelle und effektive Steuerung im Sinne einer Porenerweiterung oder Porenverringerung möglich ist.

Zudem wird mit Anspruch 18 eine Vorrichtung zur Erzeugung eines konstanten oder intermittierenden Magnetfelds im Bereich der Verbundmembran vorgesehen. Damit kann "Scaling" auf der Membranoberfläche vermieden werden, indem die Ladung in einem möglichen lonenlayer auf der Membranoberfläche dahingehend beeinflusst wird, dass keine undurchlässige Schicht entstehen kann. Dies dient zur zusätzlichen Stabilisierung der Fluxleistung der Membrane.

Gegebenenfalls kann beim Einsatz der erfindungsgemäß optimierten Verbundmembran die Überströmgeschwindigkeit zur Erzielung einer hohen Permeatmenge relativ hoch gewählt werden, wodurch ein "Fouling" ausgeschlossen wird. Gleichzeitig werden die Ausbildung von Ablagerungen innerhalb der laminaren Grenzschicht und der sich daraus ergebende zusätzliche Filterwiderstand minimiert.

Vorteilhaft ist eine solche erfindungsgemäße Verbundmembran nach Anspruch 19 einsetzbar zur Trennung von gelösten und suspendierten Stoffen aus organischen oder anorganischen Flüssigkeiten oder zur Zerlegung von flüssigen Stoffgemischen in ihre Bestandteile.

Anhand einer Zeichnung wird die Erfindung weiter näher erläutert.

Die einzige Figur zeigt schematisch eine Verbundmembrane 1, die einen flächigen Trägerkörper 2 mit relativ großen Durchströmöffnungen 3 umfasst, wobei auf dem Trägerkörper 2 eine hier lediglich beispielhaft und schematisch dargestellte Trennfunktionsschicht 4 als Membranschicht mit bestimmter Porenanzahl und Porengröße aufgebracht ist.

Der Trägerkörper 2 weist zumindest einen Anteil eines elektrisch leitenden Materials auf, wobei das elektrisch leitende Material als organisches oder anorganisches Material, vorzugsweise als metallisches Material, im Trägerkörpermaterial kontinuierlich und/oder als Seele enthalten und/oder schichtweise aufgebracht ist.

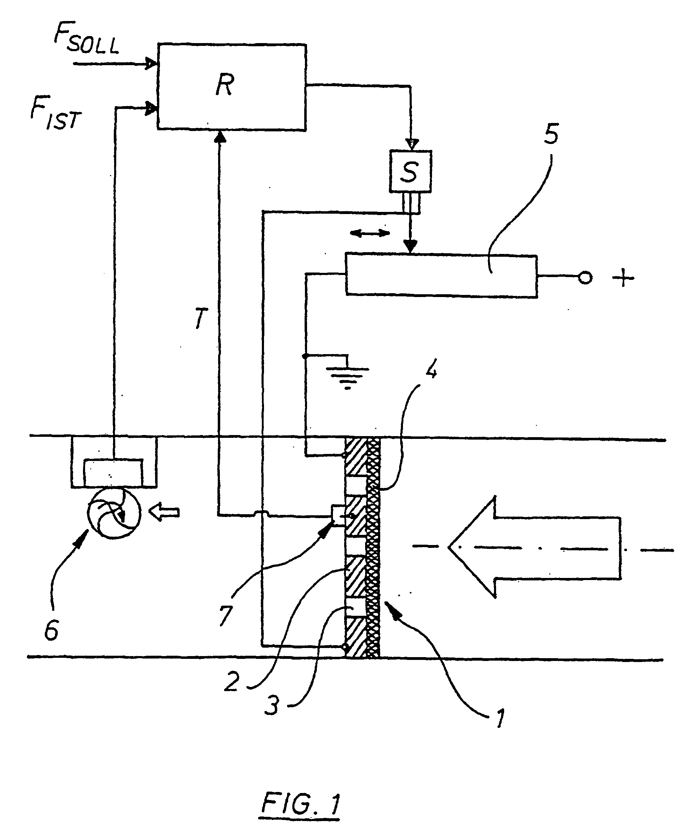

Wie dies in der Fig. 1 weiter schematisch dargestellt ist, ist der Trägerkörper 2 zur Einstellung einer bestimmten Trägerkörpertemperatur mit einer durch eine Stelleinrichtung S einstellbaren Vorrichtung 5 für eine vorgebbare Energiezufuhr zum Trägerkörper 2 und/oder Energieableitung vom Trägerkörper 2 verbunden. Wie dies der schematischen Darstellung der Fig. 1 Zu entnehmen ist, ist hier die einstellbare und mit dem Trägerkörper 2 elektrisch verbundene Vorrichtung 5 als eine elektrische Energiequelle ausgebildet, so dass der Trägerkörper 2 als eine ohmsche Heizung verwendbar ist.

Die Stelleinrichtung S und die einstellbare Vorrichtung 5 sind für eine Temperaturregelung und/oder Permeatmengenregelung als geschlossener Regelkreis aufgebaut, wobei der Messwert aus einer Permeatmengenmessvorrichtung 6, die hier lediglich beispielhaft und schematisch als Messrad dargestellt ist, und einer Temperatur-Messvorrichtung 7, die an der Verbundmembran 1 angebracht ist, als Ist-Wert einem vorzugsweise kontinuierlich arbeitendem Regler R zugeführt. Dieser Regler R ist mit einem vorgebbaren Soll-Wert beaufschlagt, wobei die Membrantemperatur und/oder die Flüssigkeitstemperatur und/oder die Überströmgeschwindigkeit und/oder der Transmembrandruck messtechnisch erfasst und im Regelkreis berücksichtigt werden können.

Die als Membranschicht ausgebildete Trennfunktionsschicht 4 ist wärmeleitend auf dem Trägerkörper 2 aufgebracht, so dass eine Änderung der Trägerkörpertemperatur auch eine Änderung der Membranschichttemperatur bewirkt.

Die Trennfunktionsschicht 4 besteht wenigstens aus einem Anteil eines sich temperaturabhängig ausdehnenden Membranmaterials, welches Poren enthält und/oder Poren begrenzt, so dass es möglich ist, durch eine gezielte Beeinflussung der einstellbaren Trägerkörpertemperatur und damit über die dadurch indirekt einstellbare Membranschichttemperatur die wirksame Porengröße mittels des Ausdehnungs-Temperaturgangs des Membranmaterials zu variieren und einzustellen. Die Variationsgröße für die Porenweiten ist dabei hauptsächlich durch den Ausdehnungs-Temperaturgang des Membranmaterials und die mögliche Temperaturvariation der Membranschichttemperatur vorgegeben. So wird z. B. bei Verwendung eines Membranmaterials, das sich bei einer Temperaturerhöhung ausdehnt, bei steigernder Temperatur die Porenweite der eingeschlossenen Poren kleiner, so dass ähnlich einem Steuerventil der Flux über die steuerbare Porenweite steuerbar ist.

## Patentansprüche

1. Vorrichtung bestehend aus einer Verbundmembrane (1) und aus einer Vorrichtung (5) für eine Energiezufuhr oder Energieableitung und aus einer Stelleinrichtung (S), wobei
die Verbundmembrane (1) aus einem flächigen Trägerkörper (2) mit relativ großen Durchströmöffnungen besteht, auf dem wenigstens eine Trennfunktionsschicht als Membranschicht (4) mit bestimmter Porenanzahl und Porengröße aufgebracht ist,
die Membranschicht (4) wenigstens aus einem Anteil eines sich temperaturabhängig ausdehnenden Membranmaterials besteht, welches Poren enthält und/oder Poren begrenzt und die Membranschicht (4) wärmeleitend auf dem Trägerkörper (2) aufgebracht ist, so dass eine Änderung der Trägerkörpertemperatur auch eine Änderung der Membranschichttemperatur bewirkt,
der Trägerkörper (2) mit der Vorrichtung (5) für eine Energiezufuhr oder Energieableitung verbunden ist und mit der Stelleinrichtung (S) die Energiezufuhr oder Energieableitung der Vorrichtung (5) vorgebbar ist, so dass damit die Trägerkörpertemperatur einstellbar ist und damit über die dadurch indirekt einstellbare Membranschichttemperatur die Porengröße mittels des Ausdehnungs-Temperaturgangs des Membranmaterials variierbar und einstellbar ist.

2. Vorrichtung nach Anspruch 1, **dadurch gekennzeichnet, dass** der Trägerkörper (2) zumindest einen Anteil eines elektrisch leitenden Materials aufweist und die einstellbare und mit dem Trägerkörper (2) elektrisch verbundene Vorrichtung (5) eine elektrische Energiequelle ist, wobei der Trägerkörper (2) als ohmsche Heizung verwendbar ist.

3. Vorrichtung nach Anspruch 2, **dadurch gekennzeichnet, dass** das elektrisch leitende Material als organisches und/oder anorganisches, insbesondere metallisches Material im Trägerkörpermaterial kontinuierlich und/oder als Seele enthalten und/oder schichtweise aufgebracht ist.

4. Vorrichtung nach einem der Ansprüche 1 bis 3, **dadurch gekennzeichnet, dass** der Trägerkörper (2) einen Gewebeaufbau, gegebenenfalls mit einer VerbindungNerknüpfung an den Kreuzungspunkten, in der Art eines Mikrosiebs aufweist.

5. Vorrichtung nach einem der Ansprüche 1 bis 4, **dadurch gekennzeichnet, dass** der Trägerkörper (2) aus einem Hohlfasermaterial aufgebaut ist, das flexibel mit Hohlraumveränderungen auf Druckunterschiede in einer umgebenden Flüssigkeit reagiert.

6. Vorrichtung nach einem der Ansprüche 1 bis 5, **dadurch gekennzeichnet, dass** der Trägerkörper (2) aus einer oder mehreren Lagen besteht, wobei das Trägermaterial aus
Mikrosiebgewebe aus veredelten leitenden und/oder nichtleitenden Metallen und/oder
Mikrosiebgewebe aus leitenden und/oder nichtleitenden Kunststoffen und/oder
leitenden und/oder nichtleitenden Keramikfdtern großer Porenweite und/oder
leitenden und/oder nichtleitenden Kunststofffiltern großer Porenweite und/oder
leitendem oder nichtleitendem Glasfasergewebe und/oder
textilen Vliesen und/oder
aus Vliesen aus leitenden und/oder nichtleitenden Kunststoffen besteht.

7. Vorrichtung nach einem der Ansprüche 1 bis 6, **dadurch gekennzeichnet, dass** die Stelleinrichtung (S) und die einstellbare Vorrichtung als geschlossener Regelkreis für eine Temperaturregelung und/oder Permeatmengenregelung aufgebaut sind,
mit einer Permeatmengen-Messvorrichtung (6) und/oder einer Temperatur-Messvorrichtung (7) am Trägerkörper (2) und/oder an einer Membranschicht (4) für eine Ist-Wert-Erfassung und
mit einem Regler (R) mit Sollwertsteller, dem der Ist-Wert zugeführt ist und der mit der Vorrichtung (5) zur Energiezufuhr oder Energieableitung als Stellglied verbunden ist.

8. Vorrichtung nach Anspruch 7, **dadurch gekennzeichnet, dass** die wenigstens eine auf den Trägerkörper (2) aufgebrachte Membranschicht (4) aus einem Verbund aus einem kömigen Füllstoff und einem Bindemittel besteht und bei mehreren Membranschichten als miteinander verbundenen Aufbauschichten diese unterschiedliche Strukturen aufweisen dergestalt, dass die Aufbauschichten jeweils aufeinanderfolgend und abgestuft einen geringeren Füllstoffanteil und entsprechend höheren Bindemittelanteil im Vergleich mit einer davor in Richtung auf den Trägerkörper liegenden Aufbauschicht aufweisen.

9. Vorrichtung nach einem der Ansprüche 1 bis 8, **dadurch gekennzeichnet, dass** die aufeinander aufgebrachten Aufbauschichten jeweils aufeinanderfolgend und abgestuft bei einem geringeren Füllstoffanteil entsprechend eine geringere Korngröße der Füllstoffe aufweisen.

10. Vorrichtung nach einem der Ansprüche 1 bis 9, **dadurch gekennzeichnet, dass** die Aufbauschichten nacheinander auf einer Seite des Trägerkörpers (2) aufgebaut sind.

11. Vorrichtung nach einem der Ansprüche 1 bis 10, **dadurch gekennzeichnet, dass** für den Aufbau einer Mikrofiltrationsmembrane eine erste Aufbauschicht einen Bindemittelanteil von 15 Gew.% bis 20 Gew.% bei einem Füllstoffanteil von 80 Gew.% bis 85 Gew.% enthält.

12. Vorrichtung nach Anspruch 11, **dadurch gekennzeichnet, dass** für den Aufbau einer Ultrafiltrationsmembrane weiter eine zweite Aufbauschicht einen Bindemittelanteil von 30 Gew.% bis 35 Gew.% bei einem Füllstoffanteil von 65 Gew.% bis 70 Gew.% enthält.

13. Vorrichtung nach Anspruch 12, **dadurch gekennzeichnet, dass** für den Aufbau einer Nanofiltrationsmembrane weiter eine dritte Aufbauschicht einen Bindemittelanteil von 35 Gew.% bis 45 Gew.% bei einem Füllstoffanteil von 55 Gew.% bis 65 Gew.% enthält.

14. Vorrichtung nach Anspruch 13, **dadurch gekennzeichnet,**
**dass** die erste Aufbauschicht Kömgrößen d₁ des Füllstoffs von
d₁ = 25µm im Mittel bei 20µm < 25µm < 30µm
**dass** die zweite Aufbauschicht Komgrößen d₂ des Füllstoffs von
d₂ = 15µm im Mittel bei 10µm < 15µm < 20µm und
**dass** die dritte Aufbauschicht Korngrößen d₃ des Füllstoffs von
d₃≤10 µm.
aufweist.

15. Vorrichtung nach einem der Ansprüche 7 bis 14, **dadurch gekennzeichnet, dass** die letzte Aufbauschicht aus Bindemittel ohne Füllstoff besteht.

16. Vorrichtung nach einem der Ansprüche 7 bis 15, **dadurch gekennzeichnet, dass** leitende und/oder nichtleitende Füllstoffe als Oxide und/oder Keramiken und/oder Alaun und/oder Graphit und/oder feinstgemahlene, für den jeweiligen Einsatz geeignete Kunststoffe verwendet sind.

17. Vorrichtung nach einem der Ansprüche 1 bis 16, **dadurch gekennzeichnet, dass** das Bindemittel aus hydrophilem oder hydrophobem Polysulfon (PSU), einschließlich deren Derivate, wie z. B. PES, PPSU und Blends, wie z. B. PSU + ABS, und/oder
dass das Bindemittel aus hydrophilen oder hydrophoben Polyvinilidinfluoriden und/oder
dass das Bindemittel aus hydrophilen oder hydrophoben Polyaramiden und/oder
dass das Bindemittel aus hydrophilen oder hydrophoben Polyamiden und/oder
dass das Bindemittel aus hydrophilen oder hydrophoben Polyolefinen und/oder
dass das Bindemittel aus hydrophilen oder hydrophoben Polyimiden und/oder
dass das Bindemittel aus hydrophilen oder hydrophoben Polyacrylaten und/oder
dass das Bindemittel aus hydrophilem oder hydrophobem Polyacetal und/oder
dass das Bindemittel aus hydrophilen oder hydrophoben Poylprenen und/oder
dass das Bindemittel aus hydrophilen oder hydrophoben Siliconen und/oder
dass das Bindemittel aus hydrophilen oder hydrophoben synthetischen Kautschuken besteht.

18. Vorrichtung nach einem der Ansprüche 1 bis 17, **dadurch gekennzeichnet, dass** eine Vorrichtung zur Erzeugung eines konstanten oder intermittierenden Magnetfeldes im Bereich der Verbundmembran vorgesehen ist.

## Claims

1. Apparatus consisting of a composite membrane (1) and of an apparatus (5) for energy supply or energy dissipation and of an actuating device (S), wherein
the composite membrane (1) consists of a sheetlike carrier body (2) having relatively large through openings and supporting at least one separating-function layer as a membrane layer (4) having a certain pore number and pore size,
the membrane layer (4) comprises a membrane material which expands as a function of temperature and which contains pores and/or defines pores and has been applied heat-conductingly to the carrier body (2), so that a change in the carrier body temperature will also effect a change in the membrane layer temperature,
the carrier body (2) is connected to the apparatus (5) for energy supply or energy dissipation and the energy supply or energy dissipation performance of the apparatus (5) is predeterminable using the actuating device (S), so that the carrier body temperature is adjustable as a consequence and the consequently indirectly adjustable membrane layer temperature can thereby be used to vary and adjust the pore size by means of the expansion-temperature course of the membrane material.

2. Apparatus according to Claim 1, **characterized in that** the carrier body (2) comprises an electrically conducting material and the adjustable apparatus (5), which is electrically connected to the carrier body (2), is an electric energy source, the carrier body (2) being usable as an ohmic heater.

3. Apparatus according to Claim 2, **characterized in that** the electrically conducting material comprises an organic and/or inorganic and especially metallic material which is present in the carrier body material in a continuous form and/or as a core and/or as an applied layer.

4. Apparatus according to any one of Claims 1 to 3, **characterized in that** the carrier body (2) comprises a woven fabric construction, optionally with bonding/linking at the crossing points, in the manner of a microsieve.

5. Apparatus according to any one of Claims 1 to 4, **characterized in that** the carrier body (2) is constructed of a hollow fibre material which responds flexibly with void space changes to pressure differences in a surrounding liquid.

6. Apparatus according to any one of Claims 1 to 5, **characterized in that** the carrier body (2) consists of one or more plies, the carrier material consisting of
microsieve fabric woven from engineered conducting and nonconducting metals and/or
microsieve fabric woven from conducting and/or nonconducting plastics and/or
conducting and/or nonconducting ceramic filters having a large pore size and/or
conducting and/or nonconducting plastics filters having a large pore size and/or
conducting and nonconducting woven glass fibre fabric and/or
textile nonwovens and/or
of nonwovens composed of conducting and/or nonconducting plastics.

7. Apparatus according to any one of Claims 1 to 6, **characterized in that** the actuating device (S) and the adjustable apparatus are constructed as a closed loop temperature and/or permeate quantity control circuit,
comprising a permeate quantity measuring apparatus (6) and/or a temperature measuring apparatus (7) on the carrier body (2) and/or on a membrane layer (4) for actual value acquisition and
comprising a closed loop controller (R) having a desired value generator to which the actual value has been supplied and which is connected to the apparatus (5) for energy supply and energy dissipation as an actuator.

8. Apparatus according to Claim 7, **characterized in that** the at least one membrane layer (4) applied to the carrier body (2) consists of a composite formed from a granular filler and a binder and, in the case of multiple membrane layers as interconnected build-up layers, these have different structures to the effect that the build-up layers each successively and graduatedly contain a lower filler fraction and a correspondingly higher binder fraction compared with a preceding build-up layer.

9. Apparatus according to any one of Claims 1 to 8, **characterized in that** the build-up layers applied atop each other each successively and graduatedly have a lower filler fraction coupled with a smaller particle size for the fillers.

10. Apparatus according to any one of Claims 1 to 9, **characterized in that** the build-up layers have been successively built up on one side of the carrier body (2).

11. Apparatus according to any one of Claims 1 to 10, **characterized in that** to construct a microfiltration membrane a first build-up layer contains a binder fraction of 15% by weight to 20% by weight coupled with a filler fraction of 80% by weight to 85% by weight.

12. Apparatus according to Claim 11, **characterized in that** to construct an ultrafiltration membrane furthermore a second build-up layer contains a binder fraction of 30% by weight to 35% by weight coupled with a filler fraction of 65% by weight to 70% by weight.

13. Apparatus according to Claim 12, **characterized in that** to construct a nanofiltration membrane furthermore a third build-up layer contains a binder fraction of 35% by weight to 45% by weight coupled with a filler fraction of 55% by weight to 65% by weight.

14. Apparatus according to Claim 13, **characterized in that**
the first build-up layer has filler particle sizes d₁ of
d₁ = 25 µm on average wi th 20 µm < 25 µm < 30 µm and
the second build-up layer has filler particle sizes d₂ of
d₂ = 15 µm on average with 10 µm < 15 µm < 20 µm and
the third build-up layer has filler particle sizes d₃ of
d₃ ≤ 10 µm

15. Apparatus according to any one of Claims 7 to 14, **characterized in that** the last build-up layer consists of binder without filler.

16. Apparatus according to any one of Claims 7 to 15, **characterized in that** conducting and nonconducting fillers are used as oxides and/or ceramics and/or alum and/or graphite and/or very finely ground plastics suitable for the particular use.

17. Apparatus according to any one of Claims 1 to 16, **characterized in that** the binder consists of hydrophilic or hydrophobic polysulphone (PSU), including derivatives thereof, for example PES, PPSU and blends, for example PSU + ABS, and/or
the binder consists of hydrophilic or hydrophobic polyvinylidene fluorides and/or
the binder consists of hydrophilic or hydrophobic polyaramids and/or
the binder consists of hydrophilic or hydrophobic polyamides and/or
the binder consists of hydrophilic or hydrophobic polyolefins and/or
the binder consists of hydrophilic or hydrophobic polyimides and/or
the binder consists of hydrophilic or hydrophobic polyacrylates and/or
the binder consists of hydrophilic or hydrophobic polyacetal and/or
the binder consists of hydrophilic or hydrophobic polyprenes and/or
the binder consists of hydrophilic or hydrophobic silicones and/or
the binder consists of hydrophilic or hydrophobic synthetic rubbers.

18. Apparatus according to any one of Claims 1 to 17, **characterized in that** an apparatus for generating a constant or intermittent magnetic field in the region of the composite membrane has been provided.

## Revendications

1. Appareil formé d'une membrane composite (1) et d'un dispositif (5) pour un apport d'énergie ou une déperdition d'énergie et formé d'un dispositif de réglage (S), dans lequel
la membrane composite (1) est formée d'un corps support (2) plat, ayant des ouvertures de passage d'écoulement relativement grandes, sur lequel au moins une couche à fonction séparatrice, réalisée sous la forme de couche membrane (4), ayant un nombre de pores et une taille de pores déterminés, est appliquée,
la couche membrane (4) est formée au moins d'une certaine proportion de matériau de membrane, s'étirant ou se dilatant en fonction de la température, contenant des pores et/ou délimitant des pores, et la couche membrane (4) est appliquée, en conduisant la chaleur, sur le corps support (2), de manière à ce qu'une variation de la température du corps support provoque également une variation de la température de la couche membrane,
le corps support (2) est relié au dispositif (5), prévu pour un apport d'énergie ou une déperdition d'énergie et, à l'aide du dispositif de réglage (S), l'apport d'énergie ou la déperdition d'énergie du dispositif (5) étant susceptible d'être prédéterminé(e), de manière qu'ainsi la température du corps support soit réglable et que, ainsi, par l'intermédiaire de la température de la couche membrane, réglable de ce fait indirectement, la taille de pore puisse être modifiée et réglée à l'aide de l'évolution de la température, provoquant l'extension ou la dilatation, du matériau de la membrane.

2. Appareil selon la revendication 1, **caractérisé en ce que** le corps support (2) présente au moins une certaine proportion de matériau conducteur de l'électricité et le dispositif (5), réglable et relié électriquement au corps support (2), est une source d'énergie électrique, le corps support (2) étant utilisable en tant que chauffage ohmique.

3. Appareil selon la revendication 2, **caractérisé en ce que** le matériau conducteur de l'électricité est contenu sous forme de matériau organique et/ou non organique, en particulier métallique, de façon continue, dans le matériau du corps support et/ou en tant qu'âme, et/ou est appliqué par couches.

4. Appareil selon l'une des revendications 1 à 3, **caractérisé en ce que** le corps support (2) présente une structure textile, le cas échéant avec une liaison/combinaison aux points de croisement, à la manière d'un micro-tamis.

5. Appareil selon l'une des revendications 1 à 4, **caractérisé en ce que** le corps support (2) est constitué d'un matériau à base de fibres creuses, qui réagit de façon flexible, par des variations des espaces creux, à des différences de pression se produisant dans un liquide environnant.

6. Appareil selon l'une des revendications 1 à 5, **caractérisé en ce que** le corps support (2) est formé d'une ou plusieurs couches, le matériau support étant formé
d'un textile formant micro-tamis, réalisé en des métaux affinés, conducteurs et/ou non-conducteurs et/ou
d'un textile formant micro-tamis formé de matières synthétiques conductrices et/ou non-conductrices et/ou
de filtres en céramique, conducteurs ou non-conducteurs, à grande largeur de pores et/ou
de filtres en matière synthétique conducteurs et/ou non-conducteurs, à grande largeur de pores et/ou
de textiles en fibres de verre, conducteurs ou non conducteurs et/ou
de matelas textiles et/ou
de matelas, réalisés en des matières synthétiques conductrices et/ou non-conductrices.

7. Appareil selon l'une des revendications 1 à 6, **caractérisé en ce que** le dispositif de réglage (S) et le dispositif réglable sont formés en circuit de réglage fermé, pour une régulation de température et/ou une régulation de la quantité de perméat,
avec un dispositif de mesure de quantité de perméat (6) et/ou un dispositif de mesure de température (7) sur le corps support (2) et/ou sur la couche de membrane (4), pour mesurer la valeur réelle, et
avec un régulateur (R) avec un régleur de valeur de consigne, auquel est amenée la valeur réelle, et qui est relié au dispositif (5) en tant qu'organe de réglage, pour l'apport d'énergie ou la déperdition d'énergie.

8. Appareil selon la revendication 7, **caractérisé en ce que** la au moins une couche de membrane (4), appliquées sur le corps support (2), sont formées d'un composite, constitué d'une charge granuleuse et d'un liant et, lorsqu'il y a plusieurs couches de membrane, faisant office de couches structurelles reliées ensemble, celles-ci présentent des structures différentes, de manière que les couches structurelles présentent chaque fois, en se suivant les unes les autres et de façon échelonnée, une plus faible proportion en charge et une plus haute proportion liant correspondante par rapport à une couche structurelle située à l'avant, dans la direction du corps support.

9. Appareil selon l'une des revendications 1 à 8, **caractérisé en ce que** les couches structurelles appliquées les unes sur les autres présentent chacune, en se suivant et de façon échelonnée, dans le cas d'une plus faible proportion en charge, de manière correspondante une plus faible taille de grain de la part des charges.

10. Appareil selon l'une des revendications 1 à 9, **caractérisé en ce que** les couches structurelles sont appliquées les unes après les autres sur un côté du corps support (2).

11. Appareil selon l'une des revendications 1 à 10, **caractérisé en ce que**, pour la construction d'une membrane de micro-filtration, une premier couche structurelle contient une proportion en liant de 15 % en poids à 20 % en poids, pour une proportion en charge de 15 % en poids à 85 % en poids.

12. Appareil selon la revendication 11, **caractérisé en ce que**, pour la construction d'une membrane pour ultra-filtration, en outre, une deuxième couche structurelle contient une proportion en liant de 30 % en poids à 35 % en poids, avec une proportion en charge de 65 % en poids à 70 % en poids.

13. Appareil selon la revendication 12, **caractérisé en ce que**, pour la construction d'une membrane de nano-filtration, en outre, une troisième couche structurelle contient une proportion en liant de 35 % en poids à 45 % en poids, pour une proportion en charge de 55 % en poids à 65 % en poids.

14. Appareil selon la revendication 13, **caractérisé en ce que**
la première couche structurelle présente des tailles de grain d₁ de charge de
d₁ = 25 µm en moyenne, avec 20 µm <25 µm<30 µm,
**en ce que** la deuxième couche structurelle présente des tailles de grain d₂ de charge de
d₂ = 15 µm en moyenne, avec 10 µm <15 µm<20 µm, et
**en ce que** la troisième couche structurelle présente des tailles de grain d₃ de charge de
d₃<10 µm.

15. Appareil selon l'une des revendications 7 à 14, **caractérisé en ce que** la dernière couche structurelle est formée d'un liant ne comportant pas de charge.

16. Appareil selon l'une des revendications 7 à 15, **caractérisé en ce que** l'on utilise des charges, conductrices et/ou non-conductrices, se présentant sous forme d'oxydes et/ou de céramiques, et/ou d'aluns, et/ou de graphite, et/ou de matières synthétiques extrêmement finement broyée, convenant pour l'utilisation spécifique.

17. Appareil selon l'une des revendications 1 à 16, **caractérisé en ce que** le liant est formé de polysulfone (PSU) hydrophile ou hydrophobe, y compris ses dérivés, tel que, par exemple, PES, PPSU et des mélanges, tels que, par exemple, PSU + ABS et/ou
**en ce que** le liant est formé de florures de polyvinylidine hydrophiles ou hydrophobes, et/ou
**en ce que** le liant est formé de polyaramides hydrophiles ou hydrophobes, et/ou **en ce que** le liant est formé de polyamides hydrophiles ou hydrophobes, et/ou
**en ce que** le liant est formé de polyoléfines hydrophiles ou hydrophobes, et/ou
**en ce que** le liant est formé de polyimides hydrophiles ou hydrophobes, et/ou
**en ce que** le liant est formé de polyacrylates hydrophiles ou hydrophobes, et/ou
**en ce que** le liant est formé de polyacétal hydrophile hydrophobe, et/ou
**en ce que** le liant est formé de polypropènes hydrophiles ou hydrophobes, et/ou **en ce que** le liant est formé de silicones hydrophiles ou hydrophobes, et/ou
**en ce que** le liant est formé de caoutchoucs synthétiques hydrophiles ou hydrophobes.

18. Appareil selon l'une des revendications 1 à 17, **caractérisé en ce qu'**il est prévu un dispositif pour produire un champ magnétique, constant ou intermittent, dans la zone de la membrane composite.
